(19) Europäisches Patentamt
European Patent Office
Office européen des brevets

(11) **EP 2 718 098 B1**

(12) **EUROPÄISCHE PATENTSCHRIFT**

(45) Veröffentlichungstag und Bekanntmachung des Hinweises auf die Patenterteilung:
**18.04.2018 Patentblatt 2018/16**

(51) Int Cl.:
**B32B 17/10** *(2006.01)* **H05B 3/86** *(2006.01)*

(21) Anmeldenummer: **12717779.8**

(22) Anmeldetag: **03.05.2012**

(86) Internationale Anmeldenummer:
**PCT/EP2012/058128**

(87) Internationale Veröffentlichungsnummer:
**WO 2012/168009 (13.12.2012 Gazette 2012/50)**

(54) **HEIZBARE VERBUNDSCHEIBE MIT SICHERHEITSFUNKTION**

HEATABLE LAMINATED GLAZING WITH SAFETY FUNCTION

VITRAGE FEUILLETÉ POUVANT ÊTRE CHAUFFÉ DOTÉ D'UNE FONCTION DE SÉCURITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.06.2011 EP 11169563**

(43) Veröffentlichungstag der Anmeldung:
**16.04.2014 Patentblatt 2014/16**

(73) Patentinhaber: **Saint-Gobain Glass France
92400 Courbevoie (FR)**

(72) Erfinder:
• **LISINSKI, Susanne
50739 Köln (DE)**
• **MELCHER, Martin
52134 Herzogenrath (DE)**
• **SCHLARB, Andreas
52134 Herzogenrath (DE)**

(74) Vertreter: **Gebauer, Dieter Edmund
Splanemann
Patentanwälte Partnerschaft
Rumfordstraße 7
80469 München (DE)**

(56) Entgegenhaltungen:
DE-A1- 2 344 616    DE-B3- 10 325 476
US-A- 3 892 947    US-A- 4 078 107
US-A- 4 808 799

**Beschreibung**

Die Erfindung betrifft eine Scheibe mit einer elektrisch beheizbaren Beschichtung, insbesondere eine elektrisch beheizbare Fahrzeugscheibe, mit Sicherheitsfunktion. Die Erfindung betrifft außerdem ein Verfahren zur Herstellung der erfindungsgemäßen Scheibe und die Verwendung der erfindungsgemäßen Scheibe als Fahrzeugscheibe, insbesondere als Fahrzeugscheibe für Elektrofahrzeuge.

Als Elektrofahrzeuge bezeichnet man Kraftfahrzeuge, die durch elektrische Energie angetrieben werden. Die Antriebsenergie wird meist in Form von aufladbaren Akkumulatoren und wiederaufladbaren Batterien im Fahrzeug mitgeführt oder durch Brennstoffzellen im Fahrzeug selbst erzeugt. Ein Elektromotor wandelt die elektrische Energie in mechanische Energie zur Fortbewegung. Die Bordspannung von Elektrofahrzeugen beträgt typischerweise von 100 V bis 400 V.

Aufgrund der begrenzten Energiespeicherdichte von Akkumulatoren oder wiederaufladbaren Batterien ist die Reichweite von Elektrofahrzeugen stark begrenzt. Der effiziente Einsatz von elektrischer Energie ist deshalb bei Elektrofahrzeugen von besonderer Bedeutung.

An die Verglasung von Elektrofahrzeugen werden die gleichen Anforderungen gestellt wie an die Verglasung von Kraftfahrzeugen mit Verbrennungsmotor. Hinsichtlich der Größe des Sichtbereichs und der strukturellen Stabilität der Scheiben gelten folgende gesetzlichen Vorschriften:

- ECE R 43: "Einheitliche Vorschriften für die Genehmigung des Sicherheitsglases und der Verbundglaswerkstoffe" sowie
- Technische Anforderungen an Fahrzeugteile bei der Bauartprüfung § 22 a StVZO, Nr. 29 "Sicherheitsglas".

Diese Vorschriften werden in der Regel durch Verbundglasscheiben erfüllt. Verbundglasscheiben bestehen aus zwei oder mehreren Einzelscheiben, insbesondere aus Floatglas und werden mit einer oder mehreren Zwischenschichten bei Hitze und Druck fest miteinander verbunden. Die Zwischenschichten bestehen meist aus thermoplastischen Kunststoffen wie Polyvinylbutyral (PVB) oder Ethylenvinylacetat (EVA).

Das Sichtfeld einer Fahrzeugscheibe muss frei von Eis und Beschlag gehalten werden. Bei Kraftfahrzeugen mit Verbrennungsmotor wird in der Regel Motorwärme verwendet, um einen Luftstrom zu erwärmen. Der warme Luftstrom wird dann auf die Scheiben gelenkt. Bei Elektrofahrzeugen ist diese Methode ungeeignet, da Elektrofahrzeuge nicht über Motorwärme verfügen. Die Erzeugung von warmer Luft aus elektrischer Energie ist wenig effizient.

Alternativ kann die Scheibe eine elektrische Heizfunktion aufweisen. DE 103 52 464 A1 offenbart eine Verbundglasscheibe mit zwei Glasscheiben. Zwischen den Glasscheiben sind parallel zueinander verlaufende Drähte eingelegt. Wird eine Spannung an die Drähte angelegt, fließt ein elektrischer Strom. Die Glasscheibe wird durch die Joulsche Wärmeentwicklung des stromdurchflossenen Widerstands beheizt. Aufgrund von Design- und Sicherheitsaspekten muss die Anzahl der Drähte in dem Glas sowie der Durchmesser der Drähte so klein wie möglich gehalten werden. Die Drähte dürfen bei Tageslicht und nachts bei Scheinwerferlicht visuell nicht oder kaum wahrnehmbar sein.

Besser geeignet sind transparente, elektrisch leitfähige Beschichtungen, wie sie aus DE 103 33 618 B3 bekannt sind. Dort weist eine Glasscheibe eine elektrisch beheizbare Silberschicht auf. Beschichtungen auf der Basis von dünnen Silberschichten sind kostengünstig herstellbar und alterungsstabil.

DE 103 25 476 B3 beschreibt ein Plattenelement mit mindestens einer starren Scheibe, die eine elektrisch leitfähige, beheizbare Beschichtung sowie eine elektrisch leitfähige, gegen die Beschichtung elektrisch isolierte und mit mindestens einem eigenen elektrischen Anschluss versehene Teilfläche trägt. Die Teilfläche ist erfindungsgemäß zum Anschluss an ein Erdungspotential vorgesehen.

Gängige Heizungen mit elektrisch leitfähigen Beschichtungen werden mit der üblichen Bordnetzspannung mit einer Gleichspannung von 12 V bis 14 V oder, bei höherer geforderter Heizleistung, mit Gleichspannungen bis 42 V betrieben. Der Schichtwiderstand beträgt je nach zur Verfügung stehender Spannung und benötigter Heizleistung zwischen 0,5 Ohm und 5 Ohm. Unter diesen Voraussetzungen lässt sich eine vereiste Windschutzscheibe im Winter in 5 bis 10 Minuten enteisen.

Bei Elektroautos ist es wünschenswert, die Schichtheizung mit der typischen Bordspannung für Elektroautos von 100 V bis 400 V zu betreiben. Das Herabsetzen von Betriebsspannungen von mehr als 100 V auf 42 V oder 14 V, beispielsweise durch ein Netzteil, ist wenig energieeffizient. Des Weiteren ermöglichen hohe Spannungen von 100 V bis 400 V eine kurze Enteisungszeit von beispielsweise 1 Minuten bei 3 kW Heizleistung. Derart kurze Enteisungszeiten sind nach derzeitigem Stand der Technik bei Betriebspannungen von 12 V bis 42 V nicht möglich.

Je nach verwendeter Betriebsspannung sind besondere Sicherheitsvorkehrungen notwendig. Gemäß der europäischen Niederspannungsrichtlinie 2006/95/EG gelten Gleichspannungen bis 75V als ungefährlich, so dass auf einen Schutz gegen direktes Berühren verzichtet werden kann. Scheiben mit elektrisch beheizbaren Beschichtungen nach dem Stand der Technik werden mit Spannungen von 12 V bis 42 V betrieben und benötigen deshalb keine gesonderten Sicherheitsvorkehrungen.

Bereits ab einer Gleichspannung von 75 V ist bei Berührung von einer Verletzungsgefahr durch Verkrampfungen und unkontrollierbare Muskelkontraktionen auszugehen. Bei Spannungen über 120 V gilt eine direkte Berührung auch für Erwachsene als lebensgefährlich und muss unter allen Umständen vermieden werden. Bei Verwendung in einem Fahrzeug ist eine Berührung möglich, wenn im Fall eines Unfalls die Isolation der spannungsführenden Beschichtung entfernt wird. Gleiches gilt für Zerstörung und Beschädigung der Scheibe durch Außeneinwirkung wie Steinschlag, Vandalismus oder bei Rettungs- und Bergungsversuchen.

Prinzipiell gelten die gleichen Überlegungen auch für Schichtheizungen, die mit Wechselspannung betrieben werden, wobei die sicherheitsrelevanten Grenzwerte hier niedriger liegen. So besteht ab einer Wechselspannung von 25 V ein akutes Verletzungsrisiko und ab einer Wechselspannung von 50 V eine akute Lebensgefahr.

Die Aufgabe der vorliegenden Erfindung besteht darin, eine Verbundscheibe mit einer transparenten, elektrisch leitfähigen Beschichtung bereitzustellen, die bei einer Gleichspannung von 75 V bis 450 V oder einer Wechselspannung von 25 V bis 450 V eine ausreichende Heizleistung aufweist und geeignete Sicherheitsvorkehrungen enthält.

Die Aufgabe der vorliegenden Erfindung wird erfindungsgemäß durch eine Verbundscheibe mit einer transparenten, elektrisch beheizbaren Beschichtung gemäß Anspruch 1 gelöst. Bevorzugte Ausführungen gehen aus den Unteransprüchen hervor. Ein Verfahren zur Herstellung einer erfindungsgemäßen Verbundscheibe und eine Verwendung der Verbundscheibe gehen aus weiteren Ansprüchen hervor.

Die erfindungsgemäße Verbundscheibe umfasst:

- mindestens eine erste Scheibe und eine zweite Scheibe,
- mindestens eine Zwischenschicht, die die Scheiben miteinander verbindet,
- mindestens eine transparente, elektrisch leitfähige erste Beschichtung, die zwischen der Zwischenschicht und der ersten Scheibe oder zwischen der Zwischenschicht und der zweiten Scheibe angeordnet ist,
- mindestens einen ersten Sammelleiter und einen zweiten Sammelleiter, die mit der ersten Beschichtung verbunden sind und der erste Sammelleiter mit einem Massepotential und der zweite Sammelleiter mit einer Gleichspannung von 75 V bis 450 V verbunden ist und
- mindestens eine transparente, elektrisch leitfähige zweite Beschichtung, die isoliert zur ersten Beschichtung angeordnet ist,

wobei die Fläche der ersten Beschichtung und die Fläche der zweiten Beschichtung zu mindestens 80 % deckungsgleich übereinander angeordnet sind und die zweite Beschichtung über mindestens einen dritten Sammelleiter mit dem Massepotential verbunden ist.

In einer bevorzugten Ausgestaltung der erfindungsgemäßen Verbundscheibe ist der zweite Sammelleiter mit einer Gleichspannung von 120 V bis 450 V. In diesem Spannungsbereich gilt eine direkte Berührung auch für Erwachsene als lebensgefährlich und muss unter allen Umständen vermieden werden.

In einer alternativen Ausgestaltung der erfindungsgemäßen Verbundscheibe ist der zweite Sammelleiter mit einer Wechselspannung von 25 V bis 450 V verbunden. In einer bevorzugten Ausgestaltung der erfindungsgemäßen Verbundscheibe ist der zweite Sammelleiter mit einer Wechselspannung von 50 V bis 450 V verbunden. In diesem Spannungsbereich gilt eine direkte Berührung auch für Erwachsene als lebensgefährlich und muss unter allen Umständen vermieden werden. In einer weiteren bevorzugten Ausgestaltung der erfindungsgemäßen Verbundscheibe ist der zweite Sammelleiter mit einer Wechselspannung von 100 V bis 300 V verbunden. Dieser Spannungsbereich ist besonders vorteilhaft für den Einsatz der Verbundscheibe in Möbeln, Geräten und Gebäuden, insbesondere für elektrische Heizkörper, da Wechselspannungen von 100V bis 300 V als haushaltsübliche Netzspannungen zur Verfügung stehen.

Die erfindungsgemäße Verbundscheibe enthält mindestens zwei Scheiben, die mit mindestens einer Zwischenschicht miteinander verbunden sind. Als Scheiben sind im Grunde alle transparenten, elektrisch isolierenden Substrate geeignet, die unter den Bedingungen der Herstellung und der Verwendung der erfindungsgemäßen Verbundscheibe thermisch und chemisch stabil sowie dimensionsstabil sind.

Die Scheiben enthalten bevorzugt Glas, besonders bevorzugt Flachglas, Floatglas, Quarzglas, Borosilikatglas, Kalk-Natron-Glas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon.

Beispiele geeigneter Gläser sind aus der deutschen Übersetzung des europäischen Patent EP 0 847 965 B1 mit dem Aktenzeichen DE 697 31 268 T2, Seite 8, Absatz [0053], bekannt.

Die Dicke der Scheiben kann breit variieren und so hervorragend den Erfordernissen des Einzelfalls angepasst werden. Vorzugsweise werden Scheiben mit den Standardstärken von 1,0 mm bis 25 mm, bevorzugt von 1,4 mm bis 2,5 mm für Fahrzeugglas und bevorzugt von 4 mm bis 25 mm für Möbel, Geräte und Gebäude, insbesondere für elektrische Heizkörper, verwendet. Die Größe der Scheiben kann breit variieren und richtet sich nach der Größe der erfindungsgemäßen Verwendung.

Die Scheiben können eine beliebige dreidimensionale Form aufweisen. Vorzugsweise hat die dreidimensionale Form keine Schattenzonen, so dass sie beispielsweise durch Kathodenzerstäubung beschichtet werden kann. Bevorzugt sind die Substrate planar oder leicht oder stark in einer Richtung oder in mehreren Richtungen des Raumes gebogen. Insbesondere werden planare Substrate verwendet. Die Scheiben können farblos oder gefärbt sein.

Die Scheiben werden durch mindesten eine Zwischenschicht miteinander verbunden. Die Zwischenschicht enthält vorzugsweise einen thermoplastischen Kunststoff, wie Polyvinylbutyral (PVB), Ethylenvinylacetat (EVA), Polyurethan (PU), Polyethylenterephthalat (PET) oder mehrere Schichten davon, bevorzugt mit Dicken von 0,3 mm bis 0,9 mm.

Die erfindungsgemäße Verbundscheibe enthält mindestens eine transparente und elektrisch leitfähige erste Beschichtung, die auf einer der Zwischenschicht zugewandten Seite einer der Einzelscheiben der Verbundscheibe angeordnet ist. Die erste Beschichtung kann direkt auf die Einzelscheibe aufgebracht sein. Die erste Beschichtung kann alternativ auf eine Trägerfolie oder auf die Zwischenschicht selbst aufgebracht sein.

Die erfindungsgemäße transparente, elektrisch leitfähige Beschichtung ist für elektromagnetische Strahlung, vorzugsweise elektromagnetische Strahlung einer Wellenlänge von 300 bis 1.300 nm, insbesondere für sichtbares Licht, durchlässig. "Durchlässig" bedeutet, dass die Gesamttransmission der Verbundscheibe den gesetzlichen Bestimmungen entspricht und insbesondere für sichtbares Licht bevorzugt >70% und insbesondere >80% ist.

Solche Beschichtungen sind beispielsweise aus DE 20 2008 017 611 U1 und EP 0 847 965 B1 bekannt. Sie bestehen in der Regel aus einer Metallschicht wie einer Silberschicht oder silberhaltigen Metalllegierung, die zwischen mindestens zwei Beschichtungen aus dielektrischem Material vom Typ Metalloxid eingebettet ist. Das Metalloxid enthält bevorzugt Zinkoxid, Zinnoxid, Indiumoxid, Titanoxid, Siliziumoxid, Aluminiumoxid oder dergleichen sowie Kombinationen von einem oder mehreren daraus. Das dielektrische Material kann auch Siliziumnitrid, Siliziumcarbid oder Aluminiumnitrid enthalten.

Bevorzugt werden Metallschichtsysteme mit mehreren Metallschichten verwendet, wobei die einzelnen Metallschichten durch mindestens eine Schicht aus dielektrischem Material getrennt sind.

Dieser Schichtaufbau wird im Allgemeinen durch eine Folge von Abscheidevorgängen erhalten, die durch ein Vakuumverfahren wie die magnetfeldgestützte Kathodenzerstäubung durchgeführt werden. Auf beiden Seiten der Silberschicht können auch sehr feine Metallschichten angeordnet werden, die insbesondere Titan, Nickel, Chrom, Nickel-Chrom oder Niob enthalten. Die untere Metallschicht dient als Haft- und Kristallisationsschicht. Die obere Metallschicht dient als Schutz- und Getterschicht, um eine Veränderung des Silbers während der weiteren Prozessschritte zu verhindern.

Die Dicke der transparenten, elektrisch leitfähigen Beschichtung kann breit variieren und den Erfordernissen des Einzelfalls angepasst werden. Wesentlich ist dabei, dass die Dicke der elektrisch leitfähigen, transparenten Beschichtung nicht so hoch werden darf, dass sie elektromagnetische Strahlung, vorzugsweise elektromagnetische Strahlung einer Wellenlänge von 300 bis 1.300 nm in hohem Maße absorbiert oder reflektiert.

Die vorliegende Erfindung beruht wesentlich auf dem Gedanken, dass eine hohe Spannung nur dann für einen Menschen gefährlich ist, wenn der Strom durch Teile des menschlichen Körpers fließen kann. Eine hohe Spannung bedeutet im Sinne der vorliegenden Erfindung eine Gleichspannung von mehr als 75 V oder eine Wechselspannung von mehr als 25 V. Bei derart hohen Spannungen findet bei Berührung durch einen Menschen in der Regel ein gesundheitsbeeinträchtigender Stromfluss durch den menschlichen Körper statt.

Es gilt deshalb eine Verbundscheibe mit einer elektrisch beheizbaren ersten Beschichtung bereitzustellen, die bei Betrieb mit einer hohen Spannung die Möglichkeit eines Stromflusses durch den menschlichen Körper reduziert, insbesondere wenn die Verbundscheibe beschädigt oder zerstört wird.

Demzufolge enthält die erfindungsgemäße Verbundscheibe mindestens eine transparente, elektrisch leitfähige zweite Beschichtung, die elektrisch isoliert zur ersten Beschichtung angeordnet ist.

In einer Verbundscheibe ist ein Berührungsschutz der hochspannungsführenden ersten Beschichtung durch die zwei festen Scheiben und die Zwischenschicht gewährleistet. Durch die stabilisierende Wirkung der Zwischenschicht, die einen zähen elastischen Kunststoff enthält, bleibt der Berührungsschutz auch bei einer zersprungenen Scheibe wirksam.

Die eigentliche Gefahr einer Berührung der hochspannungsführenden ersten Beschichtung besteht daher beim Eindringen eines metallischen Gegenstands in die Scheibe. Dies kann beispielsweise direkt bei einem Unfall erfolgen oder wenn Rettungskräfte zur Bergung die Scheibe mit einer Axt oder einer Säge durchtrennen.

Eine offen zugängliche erste Beschichtung ist ebenfalls gefährlich, beispielsweise durch Splitterablösung auf der zum Fahrzeuginnenraum liegenden Seite der Verbundscheibe nach einer massiven Außeneinwirkung oder nach einem kompletten Durchschlag der Verbundscheibe.

Um in diesen Fällen bei Berührung einen Stromfluss durch den menschlichen Körper zu verhindern, ist eine erfindungsgemäße transparente, elektrisch leitfähige zweite Beschichtung in oder an der Verbundscheibe angeordnet. Die zweite Beschichtung ist mit dem Massepotential der Bordspannungsversorgung oder einem anderen niedrigen und für den Menschen ungefährlichen Potential verbunden.

Die zweite Beschichtung ist zur ersten Beschichtung elektrisch isoliert angeordnet. Des Weiteren sind die Fläche der ersten Beschichtung und die Fläche der zweiten Beschichtung zu mindestens 80 %, bevorzugt 90% und besonders bevorzugt 95 % deckungsgleich übereinander angeordnet. Die erste und/oder die zweite Beschichtung können eine geschlossene Fläche bilden oder in kleinere Flächenbereiche unterteilt sein, wobei alle Flächenteile elektrisch leitend mit den entsprechenden Potentialen verbunden sein müssen.

In einer vorteilhaften Ausgestaltung der erfindungsgemäßen Verbundscheibe ist die zweite Beschichtung auf der der ersten Beschichtung gegenüberliegenden Seite der Zwischenschicht angeordnet. Dies hat den besonderen Vorteil, dass die erste Beschichtung und die zweite Beschichtung durch die Zwischenschicht elektrisch isoliert sind und somit keine zusätzliche Isolationsschicht notwendig ist. Des Weiteren sind die erste Beschichtung und die zweite Beschichtung im Inneren der Verbundscheibe angeordnet und durch die erste Scheibe und die zweite Scheibe mechanisch sowie chemisch, beispielsweise vor Korrosion, geschützt.

In einer weiteren vorteilhaften Ausgestaltung der erfindungsgemäßen Verbundscheibe ist die zweite Beschichtung auf mindestens der außenliegenden Seite der ersten Scheibe oder der außenliegenden Seite der zweiten Scheibe angeordnet. Außenliegende Seite bedeutet in Sinne der vorliegenden Erfindung die Außenseite der Verbundscheibe und somit die der Zwischenschicht abgewandte Seite jeder Einzelscheibe. Diese Ausgestaltung hat den Vorteil, dass eine nach einem Verfahren nach dem Stand der Technik hergestellte Verbundscheibe mit nur einer ersten Beschichtung technisch sehr einfach durch eine zweite Beschichtung ergänzt werden kann.

In einer weiteren vorteilhaften Ausgestaltung der erfindungsgemäßen Verbundscheibe sind die erste und/oder die zweite Beschichtung auf einer Kunststofffolie angeordnet. Die Kunststofffolie kann auf ihrer Vorderseite und auf ihrer Rückseite mit jeweils einer weiteren Kunststofffolie flächig verbunden sein. Ein solcher Verbund kann beispielsweise eine Zwischenschicht aus Polyvinylbutyral (PVB), eine mit einer ersten oder zweiten Beschichtung beschichteten Polyethylenterephthalat (PET)-Folie und eine Isolationsschicht aus Polyvinylbutyral (PVB) umfassen. Die Dicke der Polyvinylbutyral (PVB)-Folie beträgt beispielsweise 0,3 mm bis 0,5 mm. Die Dicke der Polyethylenterephthalat (PET)-Folie beträgt beispielsweise von 40 $\mu$m bis 80 $\mu$m und insbesondere 50 $\mu$m.

In einer weiteren vorteilhaften Ausgestaltung der erfindungsgemäßen Verbundscheibe ist die zweite Beschichtung über eine zusätzliche Isolationsschicht mit der ersten Beschichtung verbunden. Die Isolationsschicht enthält bevorzugt eine Kunststofffolie mit geeigneten elektrisch isolierenden Eigenschaften, besonders bevorzugt eine Folie, die Polyvinylbutyral (PVB), Ethylenvinylacetat (EVA), Polyurethan (PU), oder Polyethylenterephthalat (PET) enthält. Alternativ kann die Isolationsschicht eine elektrisch isolierende Oxid- oder Nitridschicht oder eine dielektrische Schicht enthalten. Diese Ausgestaltung hat den besonderen Vorteil, dass erste und zweite Beschichtung sehr nahe nebeneinander angeordnet sind, was die Schutzwirkung durch die zweite Beschichtung verbessert. So kann die Isolationsschicht sehr dünn und mechanisch wenig beständig ausgestaltet sein. Im Falle einer Zerstörung oder eines Bruchs der Scheibe findet in der Regel ein unmittelbarer Kurzschluss zwischen der ersten und der zweiten Beschichtung statt, so dass ein Stromfluss von der ersten Beschichtung zur zweiten Beschichtung erfolgt. Ein solcher Stromfluss bewirkt einerseits einen Spannungsabfall in der ersten Beschichtung in einen für den Menschen ungefährlichen Bereich. Des Weiteren wird dadurch ein hoher Stromfluss bewirkt, so dass in der Regel die elektrische Absicherung der ersten Beschichtung ausgelöst und die Spannungsversorgung unterbrochen wird.

In einer weiteren vorteilhaften Ausgestaltung der erfindungsgemäßen Verbundscheibe ist die Vorderseite der ersten Beschichtung über eine Isolationsschicht mit einer zweiten Beschichtung verbunden und die Rückseite der ersten Beschichtung ist über eine weitere Isolationsschicht mit einer weiteren zweiten Beschichtung verbunden. Das heißt die Verbundscheibe enthält eine Stapelfolge aus einer zweiten Beschichtung, einer Isolationsschicht, der ersten Beschichtung, einer weiteren Isolationsschicht und einer weiteren zweiten Beschichtung. Vorderseite der ersten Beschichtung bedeutet hier beispielsweise die Seite, die dem Fahrzeuginnenraum abgewandt ist, wenn die Scheibe in ein Fahrzeug eingebaut ist. Die weitere zweite Beschichtung ist über einen weiteren Sammelleiter mit dem Massepotential verbunden. Diese Ausgestaltung hat den besonderen Vorteil, dass die erste Beschichtung beidseitig durch eine zweite, mit dem Massepotential verbundene Beschichtung bedeckt ist. Dadurch ist es praktisch nicht möglich, die erste Beschichtung beispielsweise mit einem metallischen Gegenstand zu berühren, ohne auch mindestens eine der zwei zweiten Beschichtungen zu berühren. Des Weiteren findet im Falle einer Zerstörung oder eines Bruchs der Scheibe in der Regel ein unmittelbarer Kurzschluss zwischen der ersten und einer der zweiten Beschichtungen statt, so dass ein Stromfluss von der ersten Beschichtung zu einer der zweiten Beschichtungen erfolgt. Die weitere zweite Beschichtung enthält bevorzugt die gleiche Schicht oder Schichtfolge wie die zweite Beschichtung.

Generell ist davon auszugehen, dass bei den geschilderten Schadensfällen selbst das Vorhandensein nur einer mit dem Massepotential verbundenen, zweiten Beschichtung, unabhängig von der gewählten Ausgestaltung, einen ausreichenden Schutz bietet. Es ist praktisch unmöglich in einer zerstörten Scheibe nur die erste Beschichtung, nicht aber die zweite Beschichtung zu berühren.

Die zweite Beschichtung kann das Material der ersten Beschichtung enthalten oder mit diesem identisch sein. In einer bevorzugten Ausgestaltung der Erfindung ist die zweite Beschichtung dazu geeignet eine höhere Stromdichte schadlos zu transportieren. Dies hat den besonderen Vorteil, dass die elektrische Absicherung der ersten Beschichtung im Falle einer Zerstörung der Verbundscheibe schnell ausgelöst wird und somit die erste Beschichtung schnell spannungsfrei geschaltet wird. Zusätzlich wird eine lokale Überhitzung der zweiten Beschichtung vermieden. Die lokale Überhitzung könnte zu einer ebenfalls lokalen Zerstörung der zweiten Beschichtung führen und die Funktionalität der Sicherheitsvorkehrung verringern.

In einer vorteilhaften Ausgestaltung der erfindungsgemäßen Verbundscheibe weist die transparente, elektrisch leitfähige erste Beschichtung einen Flächenwiderstand von 1 Ohm/Quadrat bis 10 Ohm/Quadrat, bevorzugt von 3 Ohm/Quadrat bis 5 Ohm/Quadrat, auf. Die transparente, elektrisch leitfähige zweite Beschichtung weist vorteilhafterweise einen Flächenwiderstand von 0,1 Ohm/Quadrat bis 10 Ohm/Quadrat. In einer bevorzugten Ausgestaltung weist die transparente, elektrisch leitfähige zweite Beschichtung einen Flächenwiderstand von 0,4 Ohm/Quadrat bis 10 Ohm/Quadrat, besonders bevorzugt von 0,4 Ohm/Quadrat bis 10 Ohm/Quadrat und ganz besonders bevorzugt von 0,4 Ohm/Quadrat bis 5 Ohm/Quadrat auf.

Wie Untersuchungen der Erfinder ergaben, sind transparente, elektrisch leitfähige zweite Beschichtungen mit hohen Flächenwiderstände von mehr als 5 Ohm/Quadrat und insbesondere von mehr als 10 Ohm/Quadrat für eine gewünschte Sicherheitsfunktion ausreichend. Bei Kontaktierung der transparenten, elektrisch leitfähigen ersten Beschichtung durch die transparente, elektrisch leitfähige zweite Beschichtung und gleichzeitiger Berührung durch eine Person bildet sich ein Spannungsteiler durch die Ableitung des Stromes über die transparente, elektrisch leitfähige zweite Beschichtung und die Person. Aufgrund des hohen Widerstands des menschlichen Körpers, findet über die Person nur ein geringer Stromfluss statt.

In einer vorteilhaften Ausgestaltung der erfindungsgemäßen Verbundscheibe enthält die transparente, elektrisch leitfähige erste Beschichtung und/oder die transparente, elektrisch leitfähige zweite Beschichtung Silber (Ag), Indium-Zinnoxid (ITO), fluordotiertes Zinnoxid (SnO$_2$:F) oder aluminiumdotiertes Zinkoxid (ZnO:Al).

In einer vorteilhaften Ausgestaltung der erfindungsgemäßen Verbundscheibe weist die transparente, elektrisch leitfähige zweite Beschichtung eine Emissivität von unter 50% auf. Die zweite Beschichtung befindet sich dann vorzugsweise auf der dem Fahrzeuginnenraum zugewandten Außenseite der Verbundscheibe und/oder der dem Fahrzeuginnenraum abgewandten Außenseite der Verbundscheibe.

Die zweite Beschichtung enthält bevorzugt ein Schichtensystem, mit wenigstens einer Funktionsschicht auf Basis zumindest eines Metalls oder Metalloxyds aus der Gruppe, bestehend aus Niob, Tantal, Molybdän und Zirkonium, und eine fahrzeuginnenraumseitig der Funktionsschicht angeordnete dielektrische Schicht.

In einer vorteilhaften Ausgestaltung der erfindungsgemäßen Verbundscheibe sind die Fläche der ersten Beschichtung und die Fläche der zweiten Beschichtung (6) zu 100 % deckungsgleich übereinander angeordnet. Alternativ kann die Fläche der zweiten Beschichtung die Fläche der ersten Beschichtung überragen, bevorzugt um mehr als 10 %, besonders bevorzugt um mehr als 25 %.

Bei einer vorteilhaften Ausgestaltung der erfindungsgemäßen Verbundscheibe befindet sich mindestens eine transparente, elektrisch leitfähige Schicht auf mindestens einer der Innenseiten der Scheiben. Innenseite der Scheibe bedeutet hier jede der thermoplastischen Zwischenschicht zugewandte Seite. Im Falle eines Scheibenverbundes aus zwei Scheiben kann sich eine transparente, elektrisch leitfähige Schicht auf der Innenseite der einen oder der anderen Scheiben befinden. Alternativ kann sich auch jeweils eine transparente, elektrisch leitfähige Schicht auf jeder der beiden Innenseiten befinden. Im Falle eines Scheibenverbunds aus mehr als zwei Scheiben können sich auch mehrere transparente, elektrisch leitfähige Schichten auf mehreren Innenseiten der Scheiben befinden. Alternativ kann eine transparente, elektrisch leitfähige Beschichtung zwischen zwei thermoplastischen Zwischenschichten eingebettet sein. Die transparente, elektrisch leitfähige Beschichtung ist dann bevorzugt auf eine Trägerfolie oder Trägerscheibe aufgebracht. Die Trägerfolie oder Trägerscheibe enthält bevorzugt ein Polymer, insbesondere Polyvinylbutyral (PVB), Ethylenvinylacetat (EVA), Polyurethan (PU), Polyethylenterephthalat (PET) oder Kombinationen daraus.

In einer vorteilhaften Ausgestaltung der erfindungsgemäßen Verbundscheibe weist die transparente, elektrisch leitfähige erste Beschichtung n Einschnitte, wobei n eine ganze Zahl $\geq$ 1 ist, auf, so dass der Widerstand der ersten transparenten, elektrisch leitfähigen Beschichtung bei einer Gleichspannung von 75 V bis 450 V oder einer Wechselspannung von 25 V bis 450 V eine Heizleistung von 300 W/m² bis 4000 W/m² aufweist.

Die Einschnitte trennen die Beschichtung in voneinander elektrisch isolierte Bereiche. Die Einschnitte können die Beschichtung in voneinander vollständig elektrisch isolierte Bereiche trennen. Diese Bereiche können durch Sammelleiter in Reihe oder parallel verbunden werden. Alternativ oder in Kombination dazu können die Einschnitte die Beschichtung nur Abschnittsweise unterteilen. Dies hat zur Folge, dass der Strom mäanderförmig durch die Beschichtung fließt. Dadurch wird der Strompfad durch die Beschichtung verlängert und der Gesamtwiderstand der Beschichtung erhöht.

Die genaue Anzahl, die genaue Lage und die Länge der Einschnitte zur Erzielung eines gewünschten Gesamtwiderstandes kann durch einfache Versuche oder Simulationen ermittelt werden. Die Einschnitte werden bevorzugt so gestaltet, dass die Durchsicht durch die Verbundscheibe möglichst wenig beeinträchtigt wird und sich eine möglichst homogene Verteilung der Heizleistung ergibt.

In einer ersten Näherung ergibt sich die Länge des Strompfades I aus:

$$l = \sqrt{\frac{U^2}{P_{spez} \cdot R_{Quadrat}}}$$

wobei U die Betriebsspannung, $P_{spez}$ die spezifische Heizleistung und $R_{Quadrat}$ der Flächenwiderstand der transparenten, elektrisch leitfähigen Beschichtung ist. Aus dem Quotienten der Länge des Strompfades I und der Breite der Scheibe d ergibt sich näherungsweise die Anzahl der in Reihe geschalteten, elektrisch voneinander isolierten Bereiche. Anhand des gemessenen Widerstandes lässt sich durch einfache geometrische Änderungen der gewünschte Gesamtwiderstand einstellen.

Die Einschnitte in die transparente, elektrisch leitfähige Beschichtung erfolgen bevorzugt mittels eines Lasers. Verfahren zum Strukturieren dünner Metallfilme sind beispielsweise aus EP 2 200 097 A1 oder EP 2 139 049 A1 bekannt. Alternativ können die Einschnitte durch mechanisches Abtragen sowie durch chemisches oder physikalisches Ätzen erfolgen. Die minimale Breite der Einschnitte ist an die zu isolierende Spannung anzupassen und liegt bevorzugt bei 10 μm bis 500 μm, besonders bevorzugt bei 50 μm bis 100 μm.

In einer bevorzugten Ausgestaltung der erfindungsgemäßen Verbundscheibe erstreckt sich die transparente, elektrisch leitfähige erste Beschichtung auf mindestens 90 % der Fläche der Seite der Scheibe, auf die sie aufgebracht ist.

Die transparenten, elektrisch leitfähigen Beschichtungen erstrecken sich bevorzugt über die gesamte Fläche der Seite der Scheibe, auf die sie aufgebracht sind, abzüglich eines umlaufenden rahmenförmigen entschichteten Bereichs mit einer Breite von 2 mm bis 20 mm, bevorzugt von 5 mm bis 10 mm. Dieser dient der elektrischen Isolierung zwischen der spannungsführenden Beschichtung und der Fahrzeugkarosserie. Der entschichtete Bereich wird bevorzugt durch die Zwischenschicht oder einen Acrylatkleber als Dampfdiffusionssperre hermetisch versiegelt. Durch die Dampfdiffusionssperre wird die korrosionsempfindliche Beschichtung vor Feuchtigkeit und Luftsauerstoff geschützt. Zusätzlich können die transparenten, elektrisch leitfähigen Beschichtungen in einem weiteren Bereich entschichtet sein, der als Datenübertragungsfenster oder Kommunikationsfenster dient.

In einer vorteilhaften Ausgestaltung der erfindungsgemäßen Verbundscheibe sind die Einschnitte so ausgeführt, dass sie die transparente, elektrisch leitfähige erste Beschichtung in mindestens zwei elektrisch voneinander isolierte Bereiche trennt. Die Bereiche sind durch mindestens einen dritten Sammelleiter miteinander verbunden. Durch die Trennung der Bereiche und deren Verbindung durch die Sammelleiter ergibt sich eine Verlängerung des Strompfades durch die transparente, elektrisch leitfähige erste Beschichtung. Aus der Verlängerung des Strompfades folgt eine Erhöhung des elektrischen Widerstandes.

Die transparenten, elektrisch leitfähigen Beschichtungen sind mit Sammelleitern, sogenannten bus bars, zur Übertragung elektrischer Leistung verbunden. Beispiele geeigneter Sammelleiter sind aus DE 103 33 618 B3 und EP 0 025 755 B1 bekannt.

Die erfindungsgemäßen Sammelleiter werden durch Aufdrucken einer leitfähigen Paste hergestellt, die vor dem Biegen und/oder beim Biegen der Glasscheiben eingebrannt wird. Die leitfähige Paste enthält bevorzugt Silber-Partikel und Glasfritten. Die Schichtdicke der eingebrannten Silber-Paste beträgt insbesondere von 5 μm bis 20 μm.

In einer alternativen Ausgestaltung der erfindungsgemäßen Sammelleiter werden dünne und schmale Metallfolienstreifen oder Metalldrähte verwendet, die bevorzugt Kupfer und/oder Aluminium enthalten, insbesondere werden Kupferfolienstreifen mit einer Dicke von 50 μm verwendet. Die Breite der Kupferfolienstreifen beträgt bevorzugt von 1 mm bis 10 mm. Die Metallfolienstreifen oder Metalldrähte werden beim Zusammenlegen der Verbundschichten auf die Beschichtung aufgelegt. Im späteren Autoklavprozess wird durch Einwirkung von Wärme und Druck ein sicherer elektrischer Kontakt zwischen den Sammelleitern und der Beschichtung erreicht. Der elektrische Kontakt zwischen Beschichtung und Sammelleiter kann aber auch durch Auflöten oder Kleben mit einem elektrisch leitfähigen Kleber hergestellt werden.

Als Zuleitung zur Kontaktierung von Sammelleitern im Innern von Verbundscheiben werden im Fahrzeugbereich üblicherweise Folienleiter verwendet. Beispiele für Folienleiter werden in DE 42 35 063 A1, DE 20 2004 019 286 U1 und DE 93 13 394 U1 beschrieben.

Flexible Folienleiter, mitunter auch Flachleiter oder Flachbandleiter genannt, bestehen bevorzugt aus einem verzinnten Kupferband mit einer Dicke von 0,03 mm bis 0,1 mm und einer Breite von 2 mm bis 16 mm. Kupfer hat sich für solche Leiterbahnen bewährt, da es eine gute elektrische Leitfähigkeit sowie eine gute Verarbeitbarkeit zu Folien besitzt. Gleichzeitig sind die Materialkosten niedrig. Es können auch andere elektrisch leitende Materialien verwendet werden, die sich zu Folien verarbeiten lassen. Beispiele hierfür sind Gold, Silber oder Zinn und Legierungen davon.

Das verzinnte Kupferband ist zur elektrischen Isolation und zur Stabilisierung auf ein Trägermaterial aus Kunststoff aufgebracht oder beidseitig mit diesem laminiert. Das Isolationsmaterial enthält in der Regel eine 0,025 mm bis 0,05 mm dicken Folie auf Polyimid-Basis. Andere Kunststoffe oder Materialien mit den erforderlichen isolierenden Eigenschaften können ebenfalls verwendet werden. In einem Folienleiterband können sich mehrere voneinander elektrisch isolierte, leitfähige Schichten befinden.

Folienleiter, die sich zur Kontaktierung von elektrisch leitfähigen Schichten in Verbundscheiben eignen, weisen lediglich eine Gesamtdicke von 0,3 mm auf. Derart dünne Folienleiter können ohne Schwierigkeiten zwischen den einzelnen Scheiben in der thermoplastischen Klebeschicht eingebettet werden.

Alternativ können auch dünne Metalldrähte als Zuleitung verwendet werden. Die Metalldrähte enthalten insbesondere Kupfer, Wolfram, Gold, Silber oder Aluminium oder Legierungen mindestens zweier dieser Metalle. Die Legierungen können auch Molybän, Rhenium, Osmium, Iridium, Palladium oder Platin enthalten.

Die erfindungsgemäßen Zuleitungen sind aus der Verbundscheibe herausgeführt und sind bevorzugt über eine Steuerungselektrik mit der Betriebsspannung verbunden.

Ein weiterer Aspekt der Erfindung umfasst ein Verfahren zur Herstellung einer erfindungsgemäßen Verbundscheibe, wobei mindestens

a) eine erste Scheibe, eine Zwischenschicht und eine zweite Scheibe , eine transparente, elektrisch leitfähige erste Beschichtung, eine transparente, elektrisch leitfähige zweite Beschichtung, ein erster Sammelleiter, ein zweiter Sammelleiter und ein dritter Sammelleiter miteinander laminiert werden und
b) die erste Beschichtung über den ersten Sammelleiter und die zweite Beschichtung über den dritten Sammelleiter mit einem Massepotential verbunden werden und die erste Beschichtung über einen zweiten Sammelleiter mit einer Gleichspannung von 75 V bis 450 V oder einer Wechselspannung von 25 V bis 450 V verbunden wird.

Die Erfindung umfasst weiter die Verwendung der erfindungsgemäßen Verbundscheibe in Fortbewegungsmitteln für den Verkehr auf dem Lande, in der Luft oder zu Wasser, insbesondere in Kraftfahrzeugen beispielsweise als Windschutzscheibe, Heckscheibe, Seitenscheiben und/oder Dachscheibe.

Die erfindungsgemäße Verbundscheibe wird bevorzugt als Fahrzeugscheibe in Fortbewegungsmitteln mit einer Gleichspannung von 120 V bis 450 V oder einer Wechselspannung von 50 V bis 450 V verwendet.

Die erfindungsgemäße Verbundscheibe wird weiter bevorzugt verwendet als Fahrzeugscheibe in Kraftfahrzeugen, die durch Umwandlung elektrischer Energie angetrieben werden, insbesondere in Elektrofahrzeugen. Die elektrische Energie wird aus Akkumulatoren, wiederaufladbaren Batterien, Brennstoffzellen oder verbrennungsmotorgetriebenen Generatoren bezogen.

Weiter wird die erfindungsgemäße Verbundscheibe verwendet als Fahrzeugscheibe in Hybridelektrofahrzeugen, die neben der Umwandlung elektrischer Energie durch Umwandlung einer weiteren Energieform angetrieben werden. Die weitere Energieform ist bevorzugt ein Verbrennungsmotor, insbesondere ein Dieselmotor.

Die erfindungsgemäße Verbundscheibe wird weiter bevorzugt verwendet als sowie als funktionales Einzelstück, und als Einbauteil in Möbeln, Geräten und Gebäuden, insbesondere als elektrischer Heizkörper.

Im Folgenden wird die Erfindung anhand einer Zeichnung näher erläutert. Die Zeichnung ist eine schematische Darstellung und nicht maßstabsgetreu. Die Zeichnung schränkt die Erfindung in keiner Weise ein.

Es zeigen:

Figur 1A eine Querschnittsdarstellung entlang der Linie A-A' aus Figur 1B durch eine erfindungsgemäß ausgebildete Verbundscheibe,
Figur 1B eine Draufsicht auf eine erfindungsgemäß ausgebildeten Verbundscheibe,
Figur 2A eine Querschnittsdarstellung einer Verbundscheibe nach dem Stand der Technik mit Schadstelle,
Figur 2B eine Querschnittsdarstellung einer Verbundscheibe nach dem Stand der Technik unter Fremdkörpereinwirkung,
Figur 3 eine Querschnittsdarstellung einer erfindungsgemäß ausgebildeten Verbundscheibe unter Fremdkörpereinwirkung,
Figur 4 eine Querschnittsdarstellung eines weiteren Ausführungsbeispiels einer erfindungsgemäß ausgebildeten Verbundscheibe,
Figur 5 eine Querschnittsdarstellung eines weiteren Ausführungsbeispiels einer erfindungsgemäß ausgebildeten Verbundscheibe,
Figur 6 eine Querschnittsdarstellung eines weiteren Ausführungsbeispiels einer erfindungsgemäß ausgebildeten Verbundscheibe,
Figur 7 eine Draufsicht auf ein weiteres Ausführungsbeispiel einer erfindungsgemäß ausgebildeten Verbundscheibe und
Figur 8 ein Flussdiagramm eines Ausführungsbeispiels des erfindungsgemäßen Verfahrens.

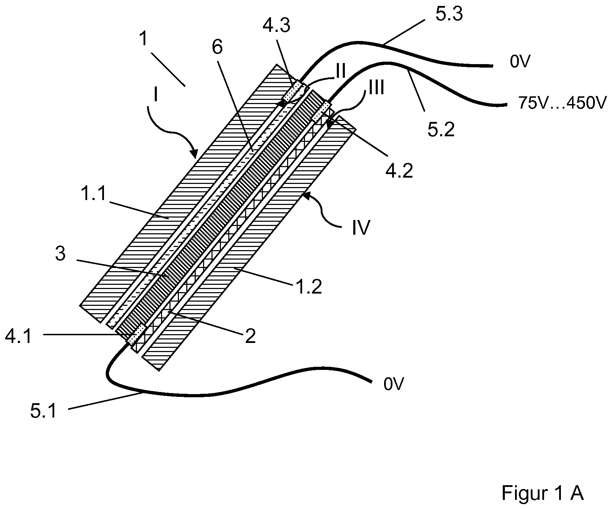

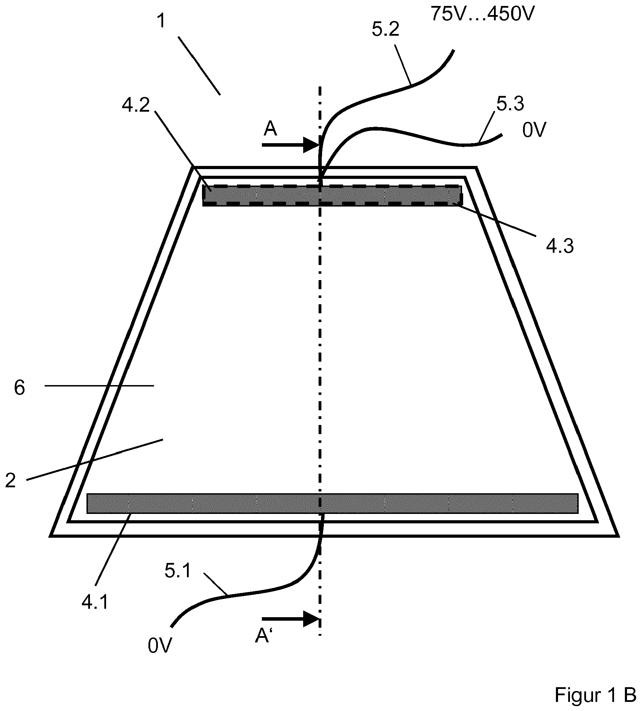

Figur 1A und Figur 1B zeigen eine mit dem Bezugszeichen 1 bezeichnete erfindungsgemäß ausgebildete Verbundscheibe. Figur 1B zeigt eine Draufsicht auf die Verbundscheibe 1 und Figur 1A eine Querschnittsdarstellung entlang der Linie A-A' aus Figur 1B.

Die einzelnen Scheiben 1.1 und 1.2 der Verbundscheibe 1 enthalten Floatglas und weisen Dicken von jeweils 2,1 mm auf. Die einzelnen Scheiben sind mit einer thermoplastischen Zwischenschicht 3 miteinander verbunden. Die thermoplastische Zwischenschicht 3 besteht aus einer Polyvinylbutyral (PVB)-Folie 3 mit einer Dicke von 0,76 mm. Im dargestellten Beispiel ist eine transparente, elektrisch leitfähige erste Beschichtung 2 auf die der thermoplastischen Zwischenschicht 3 zugewandten Seite III der inneren Scheibe 1.2 aufgebracht. Die erste Beschichtung 2 dient der Beheizung der Verbundscheibe 1. Die erste Beschichtung 2 kann gleichwohl auf die der thermoplastischen Zwischenschicht 3 zugewandten Seite II der äußeren Scheibe 1.1, oder auf beiden Scheibeninnenseiten II und I aufgebracht werden.

Im dargestellten Beispiel ist eine transparente, elektrisch leitfähige zweite Beschichtung 6 auf die der thermoplastischen Zwischenschicht 3 zugewandten Seite II der äußeren Scheibe 1.1 aufgebracht.

Die erste 2 und die zweite 6 Beschichtung sind beispielsweise aus EP 0 847 965 B1 bekannt und enthalten jeweils zwei Silberschichten, die jeweils zwischen mehreren Metall- und Metalloxidschichten eingebettet sind. Eine beispielhafte Schichtfolge ist in Tabelle 1 dargestellt.

Tabelle 1

| Material | Schichtdicke [nm] |
|----------|-------------------|
| $Si_3N_4$ | 9 |
| ZnO | 21 |
| Ti | 1 |
| Ag | 9 |
| Ti | 1 |
| ZnO | 16 |
| $Si_3N_4$ | 57 |
| ZnO | 16 |
| Ti | 1 |
| Ag | 10 |
| Ti | 1 |
| ZnO | 20 |
| $Si_3N_4$ | 18 |

Die Schichtfolge hat einen Flächenwiderstand von etwa 3 Ohm/Quadrat bis 5 Ohm/Quadrat.

Die erste Beschichtung 2 erstreckt sich über die gesamte Fläche der Seite III der Scheibe 1.2, abzüglich eines umlaufenden rahmenförmigen entschichteten Bereichs mit einer Breite von 8 mm. Dieser dient der elektrischen Isolierung zwischen der spannungsführenden Beschichtung und der Fahrzeugkarosserie. Der entschichtete Bereich ist durch Verkleben mit der Zwischenschicht 3 hermetisch versiegelt.

Die zweite Beschichtung 6 erstreckt sich deckungsgleich über die gesamte Fläche der ersten Beschichtung 2.

Ein Sammelleiter 4.1 befindet sich am in Einbaulage unteren Rand der ersten Beschichtung 2, ein Sammelleiter 4.2 an deren oberen Rand. Ein weiterer Sammelleiter 4.3 befindet sich am in Einbaulage oberen Rand der zweiten Beschichtung 6. Im in Figur 1B dargestellten Beispiel sind die Sammelleiter 4.2 und 4.3 deckungsgleich übereinander angeordnet. Die Sammelleiter 4.1, 4.2, 4.3 erstrecken sich über die gesamte Breite der Beschichtungen 2, 6. Die Sammelleiter 4.1, 4.2, 4.3 wurden mittels einer leitfähigen Silberpaste auf die Beschichtungen 2, 6 aufgedruckt und eingebrannt. Die Sammelleiter 4.1, 4.2, 4.3 sind elektrisch leitend mit den darunterliegenden Bereichen der Beschichtungen 2, 6 verbunden.

Die Zuleitungen 5.1, 5.2 und 5.3 bestehen aus verzinnten Kupferfolien mit einer Breite von 10 mm und einer Dicke von 0,3 mm. Zuleitung 5.1 ist mit dem Sammelleiter 4.1, Zuleitung 5.2 ist mit dem Sammelleiter 4.2 und Zuleitung 5.3 ist mit dem Sammelleiter 4.3 verlötet.

Auf der äußeren Scheibe 1.1 ist am Rand der innenliegenden Seite II eine opake Farbschicht mit einer Breite von 20 mm als Abdeckdruck rahmenförmig aufgebracht, was in der Abbildung aus Gründen der Übersichtlichkeit nicht dargestellt ist. Der Abdeckdruck verdeckt die Sicht auf einen Klebestrang, mit dem die Verbundscheibe in eine Fahrzeugkarosserie eingeklebt wird. Der Abdeckdruck dient gleichzeitig als Schutz des Klebers vor UV-Strahlung und damit als Schutz vor vorzeitiger Alterung des Klebers. Des Weiteren werden die Sammelleiter 4.1, 4.2, 4.3 und die Zuleitungen 5.1, 5.2, 5.3 durch den Abdeckdruck verdeckt.

Die Sammelleiter 4.1 und 4.3 sind mit dem Massepotential der Bordelektrik verbunden. Der Sammelleiter 4.2 ist mit einer Bordspannung des Fahrzeugs verbunden. Alternativ kann die Bordspannung in eine höhere Spannung oder eine niedrigere Spannung transformiert werden. Im Falle eines Elektroautos wird die Spannung aus Batterien oder Akkumulatoren entnommen und beträgt etwa von 75 V bis 450 V Gleichspannung und beispielsweise 400 V Gleichspannung. Die an den Sammelleiter 4.2 angelegte Spannung erzeugt einen Stromfluss durch die transparente, elektrisch leitfähige erste Beschichtung 2. Die erste Beschichtung 2 erwärmt sich in Folge des Stromflusses und erwärmt damit die Verbundscheibe.

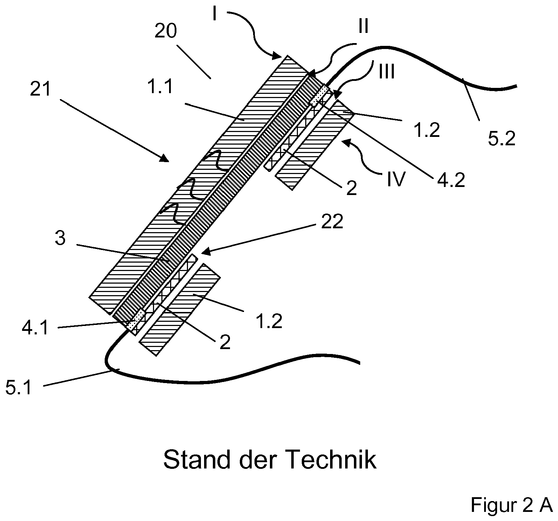

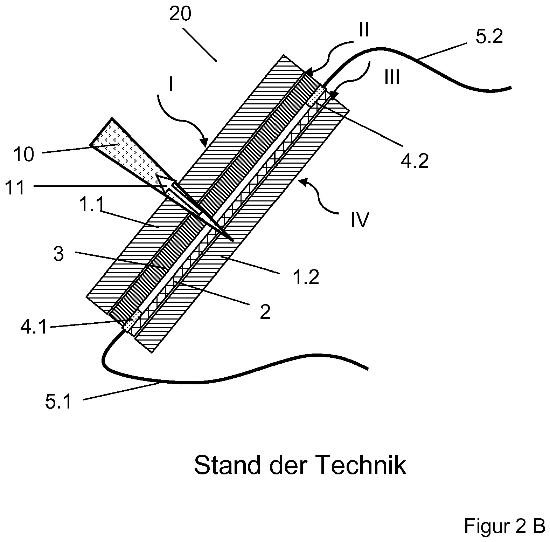

Figur 2A und Figur 2B zeigen jeweils eine mit dem Bezugszeichen 20 bezeichnete Verbundscheibe nach dem Stand der Technik. Die Verbundscheibe 20 enthält eine erste Beschichtung 2, die der Beheizung der Verbundscheibe 20 dient. Die Verbundscheibe 20 nach dem Stand der Technik enthält jedoch keine mit einem Massepotential oder einer anderen Spannung verbundene zweite Beschichtung.

Figur 2A zeigt die Verbundscheibe 20 nach einer Schlageinwirkung im Bereich 21. Die Schlageinwirkung führt zu einer Splitterablösung auf der zum Fahrzeuginnenraum liegenden Einzelscheibe 1.2. Durch die Splitterablösung liegt die erste Beschichtung 2 im Bereich 22 offen. Durch die offenliegende erste Beschichtung 2 ist es möglich, die für den Menschen gefährliche, spannungsführende erste Beschichtung 2 zu berühren.

Figur 2B zeigt eine Verbundscheibe 20 nach dem Stand der Technik, wobei ein metallischer Gegenstand 10 die erste Scheibe 1.1, die Zwischenschicht 3 und die erste Beschichtung 2 durchdrungen hat. Der metallische Gegenstand 10 kann beispielsweise ein Rettungsgerät wie eine Feuerwehraxt oder eine Glassäge sein, das zur Bergung von Insassen im Falle eines Unfalls üblicherweise eingesetzt wird. Der metallische Gegenstand 10 ist somit in Kontakt mit der spannungsführenden ersten Beschichtung. Bei Berührung des metallischen Gegenstands 10 durch einen menschlichen Körper findet ein Stromfluss 11 von der ersten Beschichtung 2 über den metallischen Gegenstand 10 über den menschlichen Körper statt. Auf Grund der hohen Gleichspannungen von 75 V bis 450 V besteht eine unmittelbare Gesundheitsgefährdung für eine Person, die den metallischen Gegenstand 10 berührt.

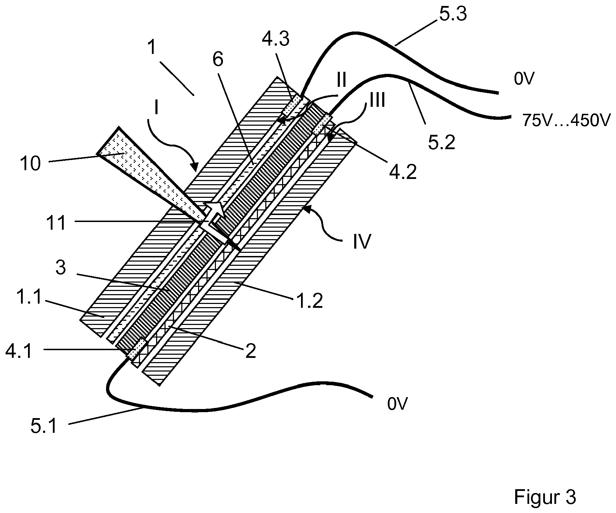

Diese Gefährdung wird in einer erfindungsgemäßen Verbundscheibe 1 durch eine transparente, elektrisch leitfähige zweite Beschichtung 2 verhindert. In Figur 3 ist eine Querschnittsdarstellung einer erfindungsgemäßen Verbundscheibe 1 dargestellt, in die ein metallischer Gegenstand 10 eingedrungen ist. Die zweite Beschichtung 2 ist mit dem Massepotential der Bordspannungsversorgung oder einem anderen niedrigen und für den Menschen ungefährlichen Potential verbunden. Es findet ein Stromfluss 11 von der ersten Beschichtung 2 zur zweiten Beschichtung 6 statt. In der Regel wird der hohe Stromfluss die elektrische Absicherung auslösen und die Spannungsversorgung der ersten Beschichtung 2 unterbrechen. Selbst wenn dies nicht der Fall ist, so hat ein menschlicher Körper einen höheren Widerstand als die zweite Beschichtung 6. In Folge dessen findet bei einer Berührung des metallischen Gegenstands 10 kein gesundheitsgefährdender Stromfluss statt.

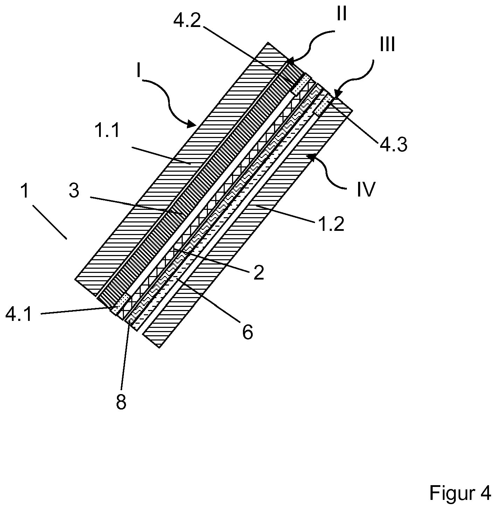

Figur 4 zeigt eine Querschnittsdarstellung eines weiteren Ausführungsbeispiels einer erfindungsgemäß ausgebildeten Verbundscheibe 1. Die Verbundscheibe 1 entspricht ihrem Aufbau nach der Verbundscheibe 1, wie sie unter Figur 1A und B beschrieben wurde. Jedoch ist die zweite Beschichtung 6 über eine Isolationsschicht 8 mit der ersten Beschichtung 2 verbunden. Die Isolationsschicht 8 enthält beispielsweise eine Folie aus Polyethylenterephthalat (PET) mit einer Dicke von 50 $\mu$m.

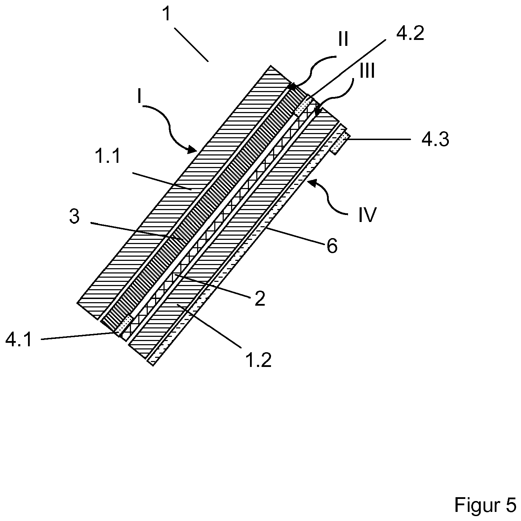

Figur 5 zeigt eine Querschnittsdarstellung eines weiteren Ausführungsbeispiels einer erfindungsgemäß ausgebildeten Verbundscheibe 1. Die zweite Beschichtung 6 ist in diesem Beispiel auf der zum Fahrzeuginnenraum weisenden Seite IV der Scheibe 1.2 angeordnet. Die zweite Beschichtung 6 ist in diesem Falle eine Schicht mit niedriger Emissivität. Die zweite Beschichtung 6 enthält beispielsweise Indiumzinnoxyd (ITO).

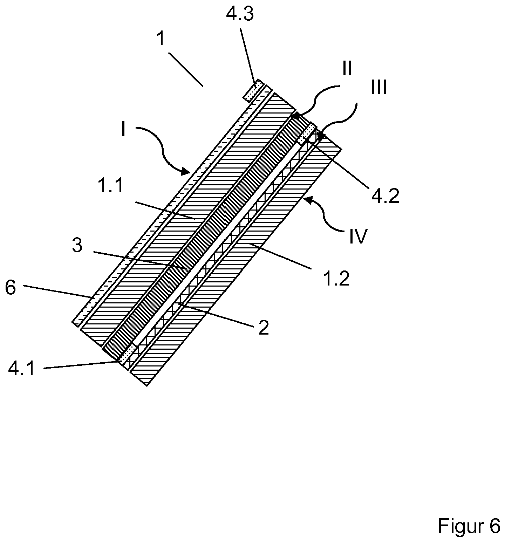

Figur 6 zeigt eine Querschnittsdarstellung eines weiteren Ausführungsbeispiels einer erfindungsgemäß ausgebildeten Verbundscheibe 1. Die Verbundscheibe 1 entspricht ihrem Aufbau nach der Verbundscheibe 1, wie sie unter Figur 1A und B beschrieben wurde. Jedoch ist die zweite Beschichtung 6 auf der Außenseite I der Verbundscheibe 1 angeordnet.

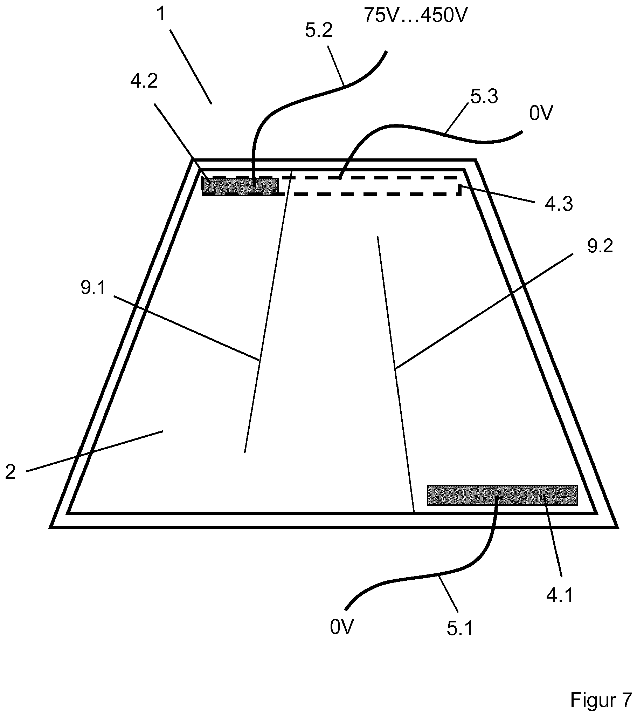

Figur 7 zeigt eine Draufsicht auf ein weiteres Ausführungsbeispiel einer erfindungsgemäß ausgebildeten Verbundscheibe 1. Die erste Beschichtung 2 weist zwei Einschnitt 9.1 und 9.2 auf. Die Einschnitte 9.1, 9.2 wurden mit einem fokussierten Laserstrahl in die erste Beschichtung 2 eingebracht. Die zweite Beschichtung 6 ist deckungsgleich über der ersten Beschichtung 2 angeordnet, enthält jedoch keine Einschnitte.

Wird eine Betriebsspannung über die Zuleitungen 5.1 und 5.2 an die Sammelleiter 4.1 und 4.2 angelegt, so fließt ein Strom durch die transparente, elektrische leitfähige erste Beschichtung 2. Der Weg des elektrischen Stromes wird durch die Einschnitte 9.1 und 9.2 verlängert und der Widerstand der ersten Beschichtung 2 zwischen den Sammelleitern 4.1 und 4.2 erhöht.

Der Sammelleiter 4.3 ist am in Einbaulage oberen Rand der zweiten Beschichtung 6 angeordnet und erstreckt sich über den gesamten oberen Rand der Verbundscheibe 1 abzüglich eines schmalen Randbereichs.

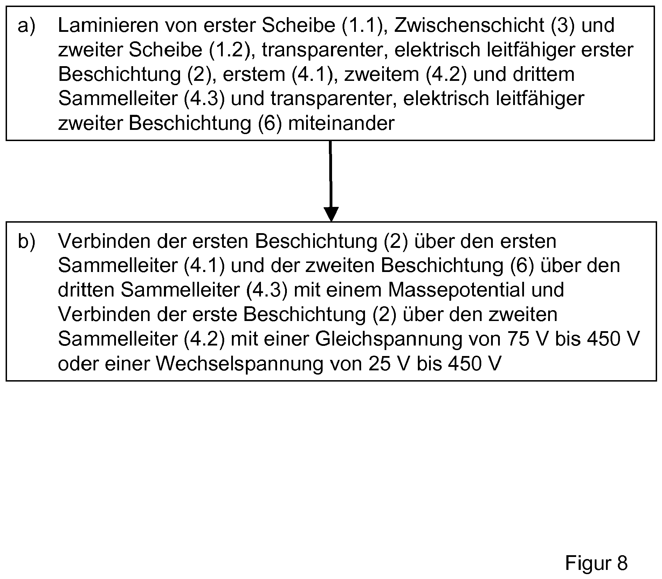

Figur 8 zeigt ein Flussdiagramm eines Ausführungsbeispiels des erfindungsgemäßen Verfahrens

Es wurden Versuche durchgeführt, bei denen ein metallischer Gegenstand 10 in Form eines metallischen Keils in eine Verbundscheibe 20 nach dem Stand der Technik und in eine erfindungsgemäße Verbundscheibe 1 geschlagen wurde. Die Anordnung entspricht der Anordnung aus Figur 2B und Figur 3.

Im Experiment wurden an der Verbundscheibe 20 nach dem Stand der Technik, regelmäßig gesundheitsgefährdende Spannungen an dem metallischen Gegenstand 10 gemessen. Bei der erfindungsgemäßen Verbundscheibe 1 konnte in keinem der Versuche eine gesundheitsgefährdende Spannung an dem metallischen Gegenstand 10 gemessen werden.

Dieses Ergebnis war für den Fachmann unerwartet und überraschend. Es zeigen:

| | |
|---|---|
| 1 | Verbundscheibe |
| 1.1 | erste Scheibe, äußere Scheibe |
| 1.2 | zweite Scheibe, innere Scheibe |
| 2 | erste Beschichtung |
| 3 | Zwischenschicht |
| 4.1, 4.2, 4.3 | Sammelleiter |
| 5.1, 5.2, 5.3 | Zuleitung |
| 6 | zweite Beschichtung |
| 8 | Isolationsschicht |
| 9.1, 9.2, 9.3 | Einschnitt, Laserschnitt |
| 10 | metallischer Gegenstand |
| 11 | Stromfluss |
| 20 | Verbundscheibe nach dem Stand der Technik |
| 21 | Absplitterung der zweiten Scheibe 1.2 |
| 22 | offene Kante der ersten Beschichtung 2 |

| | |
|---|---|
| A-A' | Schnittlinie |
| I | Außenseite der äußeren Scheibe 1.1 |
| II | Innenseite der äußeren Scheibe 1.1 |
| III | Innenseite der inneren Scheibe 1.2 |
| IV | Außenseite der inneren Scheibe 1.2 |

**Patentansprüche**

1. Verbundscheibe (1), umfassend:

- erste Scheibe (1.1), mindestens eine Zwischenschicht (3) und zweite Scheibe (1.2),
- transparente, elektrisch leitfähige erste Beschichtung (2) zwischen der Zwischenschicht (3) und der ersten Scheibe (1.1) und/oder zwischen der Zwischenschicht (3) und der zweiten Scheibe (1.2),
- ersten Sammelleiter (4.1) und zweiten Sammelleiter (4.2), die mit der ersten Beschichtung (2) verbunden sind und der erste Sammelleiter (4.1) mit einem Massepotential und der zweite Sammelleiter (4.2) mit einer Gleichspannung von 75 V bis 450 V oder einer Wechselspannung von 25 V bis 450 V verbunden ist,

wobei die Fläche der ersten Beschichtung (2) und die Fläche einer transparenten, elektrisch leitfähigen zweiten Beschichtung (6) zumindest zu 80 % deckungsgleich übereinander und isoliert voneinander angeordnet sind und die zweite Beschichtung (6) über mindestens einen dritten Sammelleiter (4.3) mit dem Massepotential verbunden ist.

2. Verbundscheibe (1) nach Anspruch 1, wobei die zweite Beschichtung (6) auf der der ersten Beschichtung (2) gegenüberliegenden Seite der Zwischenschicht (7) angeordnet ist.

3. Verbundscheibe (1) nach Anspruch 1, wobei die zweite Beschichtung (6) auf der außenliegenden Seite (I) der ersten Scheibe (1.1) und/oder der außenliegenden Seite (IV) der zweiten Scheibe (1.2) angeordnet ist.

4. Verbundscheibe (1) nach Anspruch 1, wobei die zweite Beschichtung (6) über eine Isolationsschicht (8) mit der ersten Beschichtung (2) verbunden ist.

5. Verbundscheibe (1) nach Anspruch 4, wobei die Vorderseite der ersten Beschichtung (2) über eine Isolationsschicht (8) mit der zweiten Beschichtung (6) verbunden ist und die Rückseite der ersten Beschichtung (2) über eine weitere Isolationsschicht (8) mit einer weiteren zweiten Beschichtung (6) verbunden ist.

6. Verbundscheibe nach einem der Ansprüche 1 bis 5, wobei die erste Scheibe (1.1) und/oder die zweite Scheibe (1.2) Glas, bevorzugt Flachglas, Floatglas, Quarzglas, Borosilikatglas, Kalk-Natron-Glas, oder Polymere, bevorzugt Polyethylen, Polypropylen, Polycarbonat, Polymethylmethacrylat und/oder Gemische davon enthält.

7. Verbundscheibe (1) nach einem der Ansprüche 1 bis 6, wobei die transparente, elektrisch leitfähige erste Beschichtung (2) einen Flächenwiderstand von 1 Ohm/Quadrat bis 10 Ohm/Quadrat, bevorzugt von 3 Ohm/Quadrat bis 5 Ohm/Quadrat, aufweist und/oder die transparente, elektrisch leitfähige zweite Beschichtung (6) einen Flächenwiderstand von 0,4 Ohm/Quadrat bis 10 Ohm/Quadrat und bevorzugt von 0,4 Ohm/Quadrat bis 5 Ohm/Quadrat aufweist

8. Verbundscheibe (1) nach einem der Ansprüche 1 bis 7, wobei die transparente, elektrisch leitfähige erste Beschichtung (2) und/oder die transparente, elektrisch leitfähige zweite Beschichtung (6) Silber (Ag), Indium-Zinnoxid (ITO), fluordotiertes Zinnoxid ($SnO_2$:F) oder aluminiumdotiertes Zinkoxid (ZnO:Al) enthält.

9. Verbundscheibe (1) nach einem der Ansprüche 1 bis 8, wobei die transparente, elektrisch leitfähige zweite Beschichtung (6) eine niedrige Emissivität aufweist und bevorzugt ein Schichtensystem, mit wenigstens einer Funktionsschicht auf Basis zumindest eines Metalls aus der Gruppe, bestehend aus Niob, Tantal, Molybdän und Zirkonium, und eine fahrzeuginnenraumseitig der Funktionsschicht angeordnete dielektrische Schicht aufweist.

10. Verbundscheibe nach einem der Ansprüche 1 bis 9, wobei die Fläche der ersten Beschichtung (2) und die Fläche der zweiten Beschichtung (6) deckungsgleich übereinander angeordnet sind oder die Fläche der zweiten Beschichtung (6) die Fläche der ersten Beschichtung (2) überragt.

11. Verfahren zur Herstellung einer Verbundscheibe (1) nach einem der Ansprüche 1 bis 10, wobei

a) erste Scheibe (1.1), Zwischenschicht (3) und zweite Scheibe (1.2), mindestens eine transparente, elektrisch leitfähige erste Beschichtung (2), mindestens eine transparente, elektrisch leitfähige zweite Beschichtung (6) und erster Sammelleiter (4.1), zweiter Sammelleiter (4.2) und dritter Sammelleiter (4.3) miteinander laminiert werden und

b) die erste Beschichtung (2) über den ersten Sammelleiter (4.1) und die zweite Beschichtung (6) über den dritten Sammelleiter (4.3) mit einem Massepotential verbunden werden und die erste Beschichtung (2) über einen zweiten Sammelleiter (4.2) mit einer Gleichspannung von 75 V bis 450 V oder einer Wechselspannung von 25 V bis 450 V verbunden wird.

12. Verwendung der Verbundscheibe nach einem der Ansprüche 1 bis 10 in Fortbewegungsmitteln für den Verkehr auf dem Lande, in der Luft oder zu Wasser, insbesondere in Kraftfahrzeugen beispielsweise als Windschutzscheibe, Heckscheibe, Seitenscheiben und/oder Dachscheibe sowie als funktionales Einzelstück, und als Einbauteil in Möbeln, Geräten und Gebäuden, insbesondere als elektrischer Heizkörper.

13. Verwendung der Verbundscheibe nach einem der Ansprüche 1 bis 10 als Fahrzeugscheibe in Kraftfahrzeugen, die durch Umwandlung elektrischer Energie, bevorzugt aus Akkumulatoren, wiederaufladbaren Batterien, Brennstoffzellen oder verbrennungsmotorgetriebenen Generatoren, angetrieben werden, insbesondere in Elektrofahrzeugen.

**Claims**

1.  Composite pane (1), comprising:

    - first pane (1.1), at least one intermediate layer (3), and second pane (1.2),
    - transparent, electrically conductive first coating (2) between the intermediate layer (3) and the first pane (1.1) and/or between the intermediate layer (3) and the second pane (1.2),
    - first busbar (4.1) and second busbar (4.2), which are connected to the first coating (2), wherein the first busbar (4.1) is connected to a ground potential and the second busbar (4.2) is connected to a DC voltage of 75 V to 450 V or an AC voltage of 25 V to 450 V, wherein the area of the first coating (2) and the area of a transparent, electrically conductive second coating (6) are arranged one over another with at least 80% congruence and insulated from each other, and the second coating (6) is connected via at least one third busbar (4.3) to the ground potential.

2.  Composite pane (1) according to claim 1, wherein the second coating (6) is arranged on the side of the intermediate layer (7) opposite the first coating (2).

3.  Composite pane (1) according to claim 1, wherein the second coating (6) is arranged on the outer side (I) of the first pane (1.1) and/or the outer side (IV) of the second pane (1.2).

4.  Composite pane (1) according to claim 1, wherein the second coating (6) is connected via an insulating layer (8) to the first coating (2).

5.  Composite pane (1) according to claim 4, wherein the front side of the first coating (2) is connected via an insulating layer (8) to the second coating (6) and the back side of the first coating (2) is connected via another insulating layer (8) to another second coating (6).

6.  Composite pane according to one of claims 1 through 5, wherein the first pane (1.1) and/or the second pane (1.2) include glass, preferably flat glass, float glass, quartz glass, borosilicate glass, soda lime glass, or polymers, preferably polyethylene, polypropylene, polycarbonate, polymethyl methacrylate, and/or mixtures thereof.

7.  Composite pane (1) according to one of claims 1 through 6, wherein the transparent, electrically conductive first coating (2) has a sheet resistance of 1 ohm/square to 10 ohm/square, preferably of 3 ohm/square to 5 ohm/square, and/or the transparent, electrically conductive second coating (6) has a sheet resistance of 0.4 ohm/square to 10 ohm/square and preferably of 0.4 ohm/square to 5 ohm/square.

8.  Composite pane (1) according to one of claims 1 through 7, wherein the transparent, electrically conductive first coating (2) and/or the transparent, electrically conductive second coating (6) include silver (Ag), indium tin oxide (ITO), fluor-doped tin oxide ($SnO_2$:F), or aluminum-doped zinc oxide (ZnO:Al).

9.  Composite pane (1) according to one of claims 1 through 8, wherein the transparent, electrically conductive second coating (6) has low emissivity and preferably has a layer system with at least one functional layer based on at least one metal from the group, consisting of niobium, tantalum, molybdenum, and zirconium, and has a dielectric layer arranged on the vehicle interior side of the functional layer.

10. Composite pane according to one of claims 1 through 9, wherein the area of the first coating (2) and the area of the second coating (6) are arranged congruently one above the other or the area of the second coating (6) protrudes beyond the area of the first coating (2).

11. Method for producing a composite pane (1) according to one of claims 1 through 10, wherein

    a) first pane (1.1), intermediate layer (3) and second pane (1.2), at least one transparent, electrically conductive first coating (2), at least one transparent, electrically conductive second coating (6), and first busbar (4.1), second busbar (4.2), and third busbar (4.3) are laminated to each other, and
    b) the first coating (2) is connected via the first busbar (4.1) and the second coating (6) is connected via the third busbar (4.3) to a ground potential, and the first coating (2) is connected via a second busbar (4.2) to a DC voltage of 75 V to 450 V or an AC voltage of 25 V to 450 V.

**12.** Use of the composite pane according to one of claims 1 through 10 in means of transportation for travel on land, in the air, or on water, in particular, in motor vehicles, for example, as a windshield, rear window, side window, and/or glass roof, as well as a functional individual piece and as a built-in part in furniture, devices, and buildings, in particular as an electrical heater.

**13.** Use of the composite pane according to one of claims 1 through 10 as a motor vehicle window in motor vehicles that are driven by conversion of electrical energy, preferably from accumulators, rechargeable batteries, fuel cells, or internal combustion engine driven generators, in particular in electric vehicles.

**Revendications**

**1.** Vitrage feuilleté (1) comprenant :

- première vitre (1.1), au moins une couche intermédiaire (3) et deuxième vitre (1.2),
- revêtement transparent et électriquement conducteur (2) entre la couche intermédiaire (3) et la première vitre (1.1) et/ou entre la couche intermédiaire (3) et la deuxième vitre (1.2),
- premier conducteur collectif (4.1) et deuxième conducteur collectif (4.2), qui sont connectés au premier revêtement (2) et le premier conducteur collectif (4.1) est connecté à un potentiel de masse et le deuxième conducteur collectif (4.2) à un courant continu de 75V à 450V ou à un courant alternatif de 25V à 450V,

où la surface du premier revêtement (2) et la surface d'un deuxième revêtement (6) transparent et électriquement conducteur (2) sont disposées pour coïncider à au moins 80% l'un au-dessus de l'autre et isolé l'un de l'autre et le deuxième revêtement (6) est connecté au potentiel de masse par au moins un troisième conducteur collectif (4.3).

**2.** Vitrage feuilleté (1) selon la revendication 1, où le deuxième revêtement (6) est disposé sur la face de la couche intermédiaire (7), en face de celle du premier revêtement (2).

**3.** Vitrage feuilleté (1) selon la revendication 1, où le deuxième revêtement (6) est disposé sur le côté extérieur (I) de la première vitre (1.1) et/ou sur le côté extérieur (IV) de la deuxième vitre (1.2).

**4.** Vitrage feuilleté (1) selon la revendication 1, où le deuxième revêtement (6) est relié au premier revêtement (2) par une couche isolante (8).

**5.** Vitrage feuilleté (1) selon la revendication 4, où la face avant du premier revêtement (2) est reliée par une couche isolante (8) au deuxième revêtement (6) et la face arrière du premier revêtement (2) est reliée par une couche isolante (8) supplémentaire à un autre deuxième revêtement (6).

**6.** Vitrage feuilleté selon l'une des revendications 1 à 5, où la première vitre (1.1) et/ou la deuxième vitre (1.2) contiennent du verre plat, du verre flotté, du verre de quartz, du verre de borosilicate, du verre sodo-calcique, ou des polymères, de préférence du polyéthylène, du polypropylène, du polycarbonate, du polyméthacrylate de méthyle ou des mélanges de ceux-ci.

**7.** Vitrage feuilleté selon l'une des revendications 1 à 6, où le premier revêtement (2) transparent et conducteur d'électricité présente une résistance de surface de 1 ohm/carré à 10 ohm/carré, de préférence de 3 ohms/carré à 5 ohms/carré et/ou le deuxième revêtement (6) transparent et conducteur d'électricité présente une résistance de surface de 0,4 ohm/carré à 10 ohm/carré et de préférence de 0,4 ohm/carré à 5 ohms/carré.

**8.** Vitrage feuilleté selon l'une des revendications 1 à 7, où le premier revêtement (2) transparent et conducteur d'électricité (2) et/ou ou le deuxième revêtement (6) transparent et conducteur d'électricité contient de l'argent (Ag), de l'indium, de l'oxyde d'étain (ITO), de l'oxyde d'étain dopé au fluor ($SnO_2$:F) ou de l'oxyde de zinc dopé a l'aluminium (ZnO:Al).

**9.** Vitrage feuilleté selon l'une des revendications 1 à 8, où le deuxième revêtement (6) transparent et conducteur d'électricité présente une émissivité faible et de préférence présente un système de stratification avec au moins une couche fonctionnelle basée sur au moins un métal parmi le groupe composé de niobium, tantale, molybdène et zirconium, et une couche diélectrique disposée du côté de l'intérieur du véhicule de la couche fonctionnelle.

**10.** Vitrage feuilleté selon l'une des revendications 1 à 9, où la surface du premier revêtement (2) et la surface du deuxième revêtement (6) sont alignés l'un sur l'autre ou la surface du deuxième revêtement (6) dépasse la surface du premier revêtement (2).

**11.** Procédure pour la fabrication du vitrage feuilleté (1) selon l'une des revendications 1 à 10, où :

a) première vitre (1.1), couche intermédiaire (3) et deuxième vitre (1.2), au moins un revêtement (2) transparent et conducteur d'électricité, au moins un conducteur collectif (4.1), un deuxième conducteur collectif (4.2) et un troisième conducteur collectif (4.3) sont stratifiées entre eux et
b) le premier revêtement (2) est connecté par le premier conducteur collectif (4.1) à un potentiel de masse et le deuxième revêtement (6) est connecté par le troisième conducteur collectif (4.3) à un potentiel de masse et le premier revêtement (2) est connecté par un deuxième conducteur collectif (4.2) à un courant continu de 75V à 450V ou à un courant alternatif de 25V à 450V,

12. Utilisation du vitrage feuilleté selon l'une des revendications 1 à 10 dans les moyens de locomotion pour les déplacements sur la terre, dans l'air ou dans l'eau, en particulier dans les véhicules automobiles, par exemple, comme pare-brise, lunette arrière, fenêtres latérales et/ou toit vitré ainsi que comme élément fonctionnelle unique, et comme composant dans le cadre de l'installation dans le mobilier, les équipements et les bâtiments, en particulier comme radiateur électrique.

13. Utilisation du vitrage feuilleté selon l'une des revendications 1 à 10 comme fenêtre de véhicule dans les véhicules automobiles, qui sont propulsés par la conversion d'énergie électrique, de préférence d'accumulateurs, de batteries rechargeables, de piles à combustible ou de générateurs alimentés par un moteur à combustion, en particulier dans les véhicules électriques.

Figur 1 A

EP 2 718 098 B1

Figur 1 B

16

Stand der Technik

Figur 2 A

20

II

5.2

I

10

11

1.1

3

4.1

4.2

III

IV

1.2

2

5.1

Stand der Technik

Figur 2 B

Figur 3

Figur 4

Figur 5

Figur 6

75V…450V

0V

0V

Figur 7

a) Laminieren von erster Scheibe (1.1), Zwischenschicht (3) und zweiter Scheibe (1.2), transparenter, elektrisch leitfähiger erster Beschichtung (2), erstem (4.1), zweitem (4.2) und drittem Sammelleiter (4.3) und transparenter, elektrisch leitfähiger zweiter Beschichtung (6) miteinander

b) Verbinden der ersten Beschichtung (2) über den ersten Sammelleiter (4.1) und der zweiten Beschichtung (6) über den dritten Sammelleiter (4.3) mit einem Massepotential und Verbinden der erste Beschichtung (2) über den zweiten Sammelleiter (4.2) mit einer Gleichspannung von 75 V bis 450 V oder einer Wechselspannung von 25 V bis 450 V

Figur 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10352464 A1
- DE 10333618 B3
- DE 10325476 B3
- EP 0847965 B1
- DE 69731268 T2
- DE 202008017611 U1
- EP 2200097 A1
- EP 2139049 A1
- EP 0025755 B1
- DE 4235063 A1
- DE 202004019286 U1
- DE 9313394 U1